# EUROPEAN PATENT SPECIFICATION

(11) **EP 2 588 785 B1**
(45) Date of publication and mention of the grant of the patent: **01.10.2014**
(21) Application number: 11729726.7
(22) Date of filing: 31.05.2011
(51) Int. Cl.: F16K 5/06, F16K 35/06

(54) **A FLUID CHECK VALVE**
FLÜSSIGKEITSRÜCKSCHLAGVENTIL
CLAPET ANTI-RETOUR POUR FLUIDE

(30) Priority: 02.07.2010 IT MI20101219
(43) Date of publication of application: 08.05.2013
(73) Proprietor: FIMCIM S.P.A., 20121 Milano (MI) (IT)
(72) Inventor: CIMBERIO, Renzo, I-20121 Milano (IT)
(74) Representative: Sutto, Luca
(86) International application number: PCT/IB2011/052383
(87) International publication number: WO 2012/001552

(56) References cited:
- EP-A1- 1 074 772
- EP-A1- 1 479 957
- WO-A1-00/79165
- WO-A1-2004/079238

## Description

The present invention relates to a fluid check device, for example for liquids or gases.

Fluid check devices are typically installed on supply and/or distribution lines of liquids and/or gases, for example with the aim of selectively enabling or checking fluid passage.

In a first type of fluid check device, a main body is comprised having a passage hole in which an obturator organ operates and is angularly displaceable between an open position and a closed position by activation of a tap connected to the obturator element via a stem. In practice, a user can act externally of the main body by rotating the tap and operating the angular rotation of the manoeuvring stem which causes a corresponding angular rotation of the obturator organ between an open position, in which the obturator enables fluid communication between an inlet opening and an outlet opening present on the valve body, and a closed position in which the obturator organ obstructs passage of fluid between the openings.

With the aim of enabling a known angular travel of the obturator organ, a guide part of the manoeuvring tap can be provided with an undercut cooperating with a relief present on the main body, such as to limit the angular travel of the manoeuvring tap and, consequently, of the stem and the obturator organ between two predefmed angular positions.

In some technical solutions, the manoeuvring tap, once the desired angular position has been reached, can be axially disengaged from the stem and then reinserted on the stem in a different angular position, taken herein to be a safety position, in which the tap cooperates with a blocking element solidly constrained to the main body, such that no angular rotation of the tap, and therefore of the obturator organ, is possible. A solution like this is adopted with the aim of preventing a further angular rotation of the obturator organ from inadvertently occurring when the organ has reached the desired angular position. In some applications, axial blocking between the stem and the manoeuvring tap into a safety position is desirable, with the aim of preventing intrusion or undesired movements of the tap and therefore in order to guarantee a stable blocking of the obturator organ in the desired angular position. For this purpose, the manoeuvring tap can be engaged to the end of the stem by means of a blocking screw which enables, once the tap is placed in the safety position, and therefore the angular blocking position, prevention of a decoupling between the stem and the tap, thus guaranteeing the impossibility of rotating the obturator organ.

In other solutions, where a high degree of security is to be ensured, and in particular where it is desired to enable activation of the obturator organ only by authorised personnel, the obturator can be blocked in the safe position, whether this is a closed condition or an open condition of the obturator, by means of locks or combination blocking means which achieve an angular blocking of the manoeuvring tap and which can be unsecured only by authorised personnel. It is however evident that the use of locks or other solutions which are large and unwieldy not only exhibits drawbacks in terms of size but also incurs high costs, while not ensuring total security.

In some solutions, with the aim of blocking the tap and the obturator in the open or closed position, while avoiding the use of locks and/or unwieldy solutions, threaded elements have been used for coupling the tap to a threaded end of the obturator organ. In particular, Italian patent application no. BS99A0000462 as well as International application no. PCT/IT00/00164 disclose a fluid check organ in which a tap is engaged to an end of a manoeuvring stem by use of a bolt having a substantially spherical head exhibiting an axial opening for receiving a manoeuvring tool designed to disengage the bolt from the end of the manoeuvring stem. This axial opening has a special profile which enables insertion only of a specially-designed manoeuvring tool. With this type of solution however the tap cannot be disengaged by acting on the bolt with hex keys. The above-cited patent applications also describe a solution comprising a fluid check organ in which the manoeuvring stem receives the manoeuvring tap which is engaged thanks to a terminal bolt the head of which is however made inaccessible as it is specially housed in a seating present in the manoeuvring tap and hidden by an expanded portion located superiorly of the bolt: in practice access to the hexagonal head of the bolt is only enabled by using a tubular key able to pass beyond the head and gain access to the above-described hexagonal portion.

Further prior art fluid valves are disclosed in the documents EP1479957-A1, WO00/79165-A1, WO2004/079238-A1 and EP1074772-A1.

### SUMMARY

The above-described solutions have been shown to be further improvable.

In particular, an aim of the present invention is to disclose a fluid check organ in which the obturator organ can be blocked by use of a technical solution that is compact and highly secure.

A further aim of the invention is to make a technical solution available which is economic to realise and which at the same time improves the safety of the coupling between the manoeuvring tap and the stem connected to the obturator. A further aim of the invention is to make available a solution which can easily be implemented on both currently-available obturator organs and on new ones. At least one of the above-listed aims is substantially attained by a fluid check organ according to one or more of the accompanying claims; further aspects of the invention are described herein below.

A fluid check device is described comprising: a main body internally exhibiting a fluid passage channel extending between at least an inlet opening and at least an outlet opening; an obturator housed internally of the main body and displaceable between a first operating position and a second operating position; a transmission rod having a first portion which is connected to the obturator and a second portion that emerges externally with respect to a main body;
a manoeuvring organ engaged to the second portion of the transmission rod for manoeuvring the obturator between the first operating position and the second operating position, the manoeuvring organ being crossed by the second portion of the transmission rod; a removable stop element which, in a condition in which it is engaged to the second portion of the transmission rod, axially constrains the manoeuvring organ to the transmission rod; and an auxiliary body, which in the engaged condition of the stop element exhibits an anchoring portion located in a radially external position with respect to the stop element and at least a gripping portion activatable for conjoinedly disengaging the auxiliary body and the stop element from the second portion of the transmission rod.

Preferably, the second portion of the transmission rod exhibits a threaded part, or in any case a profiled part such as to removably engagingly receive a seating, also threaded, of the removable stop organ.

Preferably,the stop element is engaged to an end of the transmission rod that is opposite the obturator.

Preferably, the stop element exhibits an external radial volume which is variable progressively along a parallel direction to the transmission axis. In practice the profile of the stop element has an external radial volume which is not constant, such as to form one or more undercuts.

Preferably,the stop element exhibits a first portion having a cylindrical external surface having a first radius and at least a second portion, consecutive to the first portion and exhibiting an external cylindrical surface having a second radius which is smaller than the first radius, an undercut (19) being defined between the first portion and the second portion.

Preferably,the auxiliary body comprises a tubular element. For example the auxiliary body exhibits a radially external surface that is cylindrical and able to rotate internally of a seating complementarily shaped thereto and present on the manoeuvring organ.

Preferably, the auxiliary body exhibits a radially internal surface comprising at least a first part which is complementarily shaped with respect to the radially external surface of the stop element and defining the anchoring portion.

Preferably, the anchoring portion of the auxiliary body comprises a terminal lip extending radially internally of the auxiliary body, in a direction of the removable stop element, and engaging the undercut formed by the radially external surface of the stop element.

Preferably, the auxiliary body in the engaged position houses the stop element internally thereof, making the radially external surface of the stop element inaccessible to a tool.

Preferably, the auxiliary body extends axially, with reference to an engaged condition, more than the stop element at least on a side opposite the transmission rod, such as to provide a portion that is accessible to a manoeuvring tool.

Preferably, the gripping portion of the auxiliary body extends axially beyond a terminal surface of the stop element and comprises a gripping lip extending radially towards an inside of the auxiliary body.

Preferably, on a side opposite the obturator the manoeuvring organ exhibits a cavity which in the engagement condition of the stop element houses the terminal portion of the transmission rod, the stop element, and at least a portion of the auxiliary body. For example, a radially external lateral surface of the auxiliary body in this engaged position is made practically inaccessible by a tool and is substantially free to rotate with respect to surface defining the cavity.

Preferably, the cavity exhibits a beaker conformation and comprises an internal lateral surface which is complementarily shaped with respect to an external lateral surface of the auxiliary body; for example, the internal lateral surface of the cavity and the external lateral surface of the auxiliary body are cylindrical.

Preferably, the assembly of the stop element and the auxiliary body is movable into an axially compact condition at which the assembly can be coupled or decoupled from the terminal portion of the rod by acting on the gripping portion.

Preferably, the stop element is torsionally solidly constrained to the auxiliary body in the compacted condition; in practice a rotation about the axis of the rod imposed on the auxiliary body is also transmitted to the stop element.

Preferably, the obturator comprises a body having at least a through-cavity, the body being angularly positionable in the first position, in order to enable a flow of fluid from the inlet opening to the outlet opening, and in the second position in order to prevent fluid passage between the inlet opening and the outlet opening.

Preferably, the transmission rod exhibits an end which is angularly constrained to the obturator and a second end which is angularly constrained to the manoeuvring organ.

Preferably,the manoeuvring organ comprises at least a guide portion cooperating with a corresponding guide counter-portion solidly constrained to the main body.

Preferably, the manoeuvring organ comprises at least an angular blocking element cooperating with a respective angular blocking counter-element present on the guide counter-portion.

Preferably, the guide portion of the manoeuvring organ comprises at least an angular end-run element cooperating with a respective angular end-run counter-element on the guide counter-portion in order to delimit an angular run of the manoeuvring organ between an initial angular position and a final angular position corresponding to the first position and the second position of the obturator organ.

A tool for engaging and disengaging a removable stop element to and from a fluid check device as in any one of the preceding aspects.

The tool comprises: at least a coupling element having a terminal portion able to engage the gripping portion of the auxiliary body, and
at least a pusher element cooperating with the coupling element for acting strikingly against a terminal surface of the stop element when the coupling element engages the gripping portion of the auxiliary body.

The coupling element exhibits a tubular conformation and internally houses at least a portion of the pusher element.

The pusher element exhibits a threaded portion engaging a corresponding threaded portion internally present on the coupling element.

The pusher element comprises a first end destined to act abuttingly against the terminal surface of the stop element, an intermediate tract housing the threaded portion, and a second end having a respective manoeuvring element for example torsionally solidly engaged to or in a single piece with the pusher element.

Preferably, the terminal portion of the coupling element exhibits one or more longitudinal incisions defining longitudinal tracts of the terminal portion able to flex radially. In this way, the terminal portion can be selectively expanded or contracted radially thanks to the action of the pusher operating internally of the coupling element.

Preferably, the threaded portion of the coupling element extends at least partially on a tract which is free of incisions in order to couple with the threaded portion of the pusher element, a relative rotation between the pusher element and the coupling element realising a relative axial motion between them.

Preferably, the terminal portion of the coupling element exhibits, in longitudinal section, a hooking portion able to cooperate with the gripping lip of the auxiliary body.

Preferably, the coupling element exhibits a manoeuvring element, preferably extending at an end of the coupling element that is opposite the end exhibiting the lip.

Preferably, a terminal portion of the pusher element exhibits a longitudinal tract having a first external diameter and a second longitudinal tract, consecutive to the first longitudinal tract and having a second external diameter which is smaller than the first.

Preferably, a terminal portion of the coupling element exhibits a longitudinal tract having a first internal diameter and a second longitudinal tract, consecutive to the first longitudinal tract and having a second internal diameter which is smaller than the first, an axial sliding of the pusher element leading to a radial expansion of the terminal portion of the coupling element.

Preferably, the first longitudinal tract is connected to the second longitudinal tract of the pusher element by a converging tract which is for example truncoconically conformed; likewise, the first longitudinal tract is connected to the second longitudinal tract of the coupling element by a respective converging tract, complementarily shaped to the tract on the pusher element and for example also defining a truncoconical surface.

Preferably, the internal diameter of the second longitudinal tract present on the coupling element is greater than an external diameter of the second longitudinal tract present on the pusher element.

Preferably, the use of a tool for engaging and/or disengaging the stop element from the check device.

A process for disengaging the stop element from the check device by use of a tool.

The process comprises the following steps:
coupling a terminal portion of the coupling element with the gripping portion of the auxiliary body;
rotating the axial pusher with respect to the coupling element in a first direction such as to determine a corresponding axial movement capable of mutually torsionally blocking the stop element, the auxiliary body and the coupling element;
rotating the coupling element in a second direction opposite the first direction in order to disengage the assembly constituted by the auxiliary body and the stop element from the second portion of the transmission rod of the check device.

A process for engaging a stop element to a check device use of a tool Z.

With the purpose of proceeding with the engagement of a stop element, the tool has previously engaged the assembly of the stop element and the auxiliary body to the terminal portion of the coupling element.

The process comprises the following steps:
rotating the coupling element in a first direction for engaging an assembly constituted by the auxiliary body and the stop element to the second portion of the transmission rod;
rotating the axial pusher with respect to the coupling element in order to realise an axial displacement capable of torsionally unblocking the stop element, the auxiliary body and the coupling element;
decoupling the terminal portion of the coupling element from the gripping portion of the auxiliary body.

### DESCRIPTION OF THE FIGURES

Some aspects of the invention are illustrated in the accompanying figures of the drawings, provided by way of non-limiting example, in which:
- figure 1 illustrates a fluid check device in a side elevation and with some parts sectioned; a tool is engaged to the device of figure 1 for enabling blocking and unblocking of a manoeuvring organ of the check device;
- figure 2 is a front elevation of the device illustrated in figure 1;

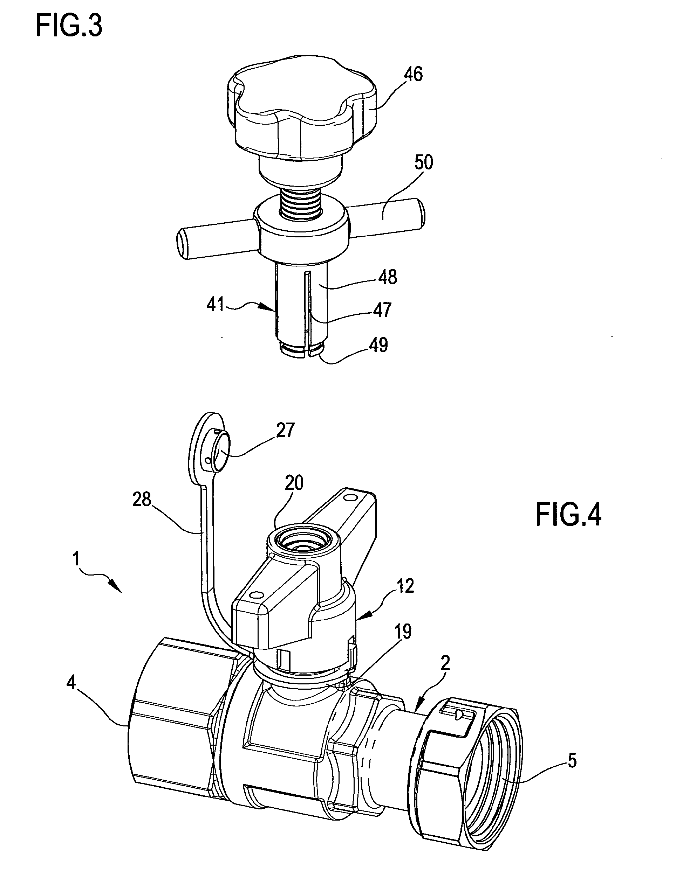

- figure 3 is a perspective view of the manoeuvring equipment, usable with the fluid check device of the invention;
- figure 4 is a perspective view of a fluid check organ according to the invention;
- figure 5 is an exploded perspective view showing a fluid check organ according to the invention and a manoeuvring tool which can be used in cooperation with the device of the invention;
- figure 6 is a longitudinal section of a tool usable with the check device of the invention;
- figure 7 is a perspective view of the tool of figure 6;
- figure 8 is a longitudinal section according to line VIII-VIII, as shown in figure 9, of a fluid check organ of the type illustrated in figure 3, in an unblocked condition in which the obturator is open;
- figure 9 is a front view of the obturator of figure 8; figure 9 also shows line VIII-VIII;
- figure 10 is a longitudinal section view according to line X-X, shown in figure 11, of a fluid check organ as in figure 3, in a condition in which the obturator is closed and angularly blocked;
- figure 11 is a front view of the obturator of figure 10; figure 11 also shows line X-X;
- figure 12 illustrates, in a longitudinal section according to line XII-XII, the line of which is shown in figure 13, a fluid check organ with a relative manoeuvring tool of the type of figure 1, in a condition in which the obturator is closed and blocked;
- figure 13 is a front view of the obturator of figure 12; figure 13 also indicates line XII-XII;
- figure 14 illustrates, in a longitudinal section along line XIV-XIV, represented in figure 14, a fluid check organ with a relative manoeuvring organ as in figure 1, in a condition in which the obturator is open and not blocked; and
- figure 15 is a front view of the obturator of figure 14; figure 15 also includes line XIV-XIV.

### DETAILED DESCRIPTION

With reference to the accompanying figures of the drawings, 1 denotes in its entirety a fluid check device according to aspects of the invention.

The device 1 comprises a main body 2 exhibiting internally thereof a channel 3 extending between at least an inlet opening 4 and at least an outlet opening 5. Respective attachment elements can be present at the inlet opening 4 and the outlet opening 5, for example threaded organs, for connecting the main body to tubing and/or to components of a circuit.

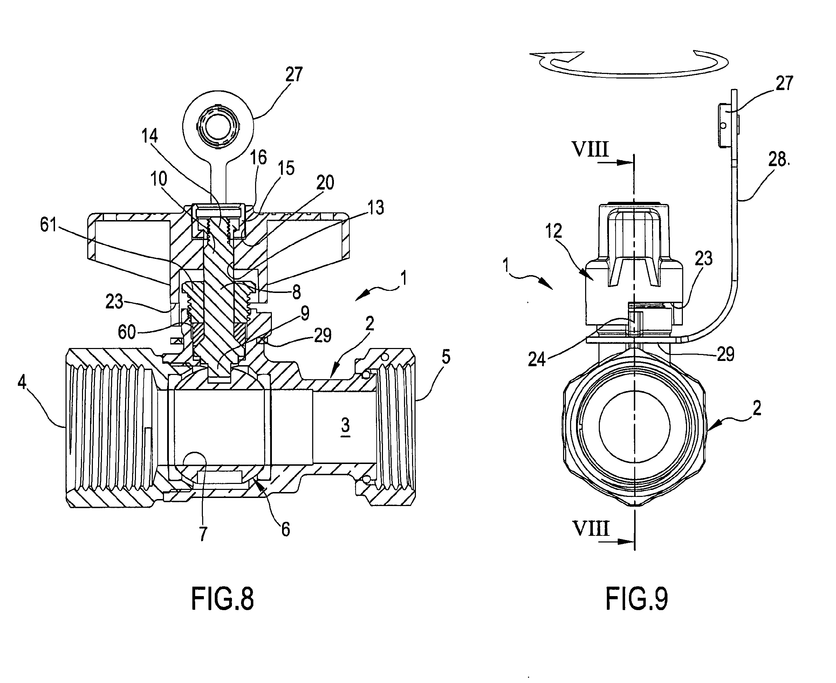

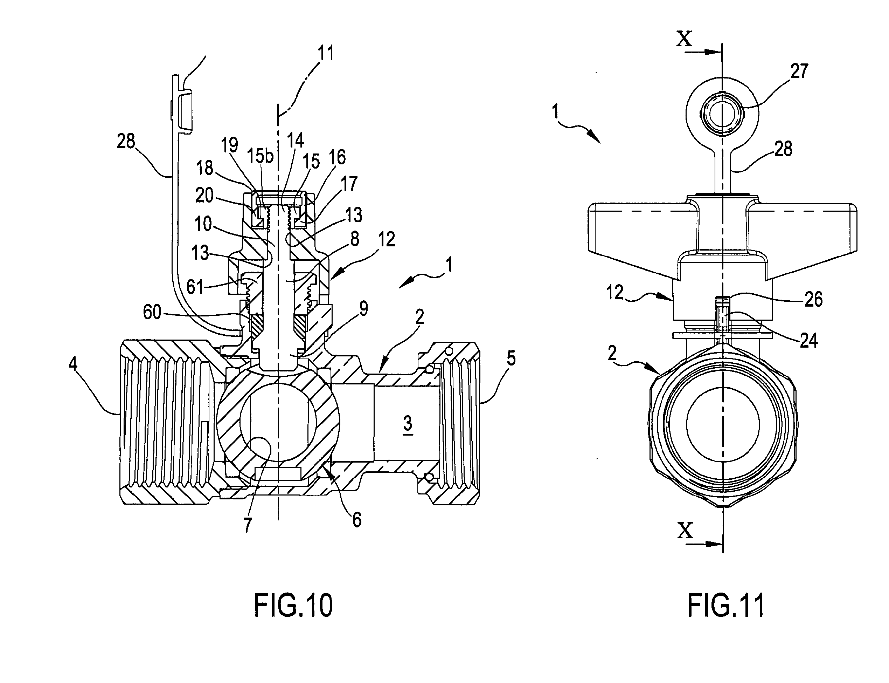

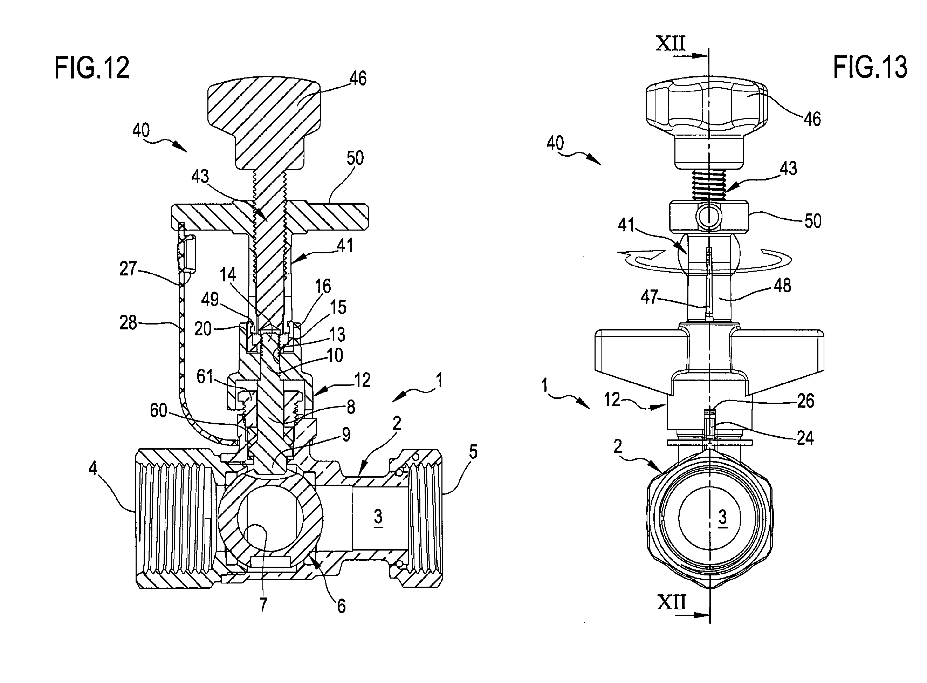

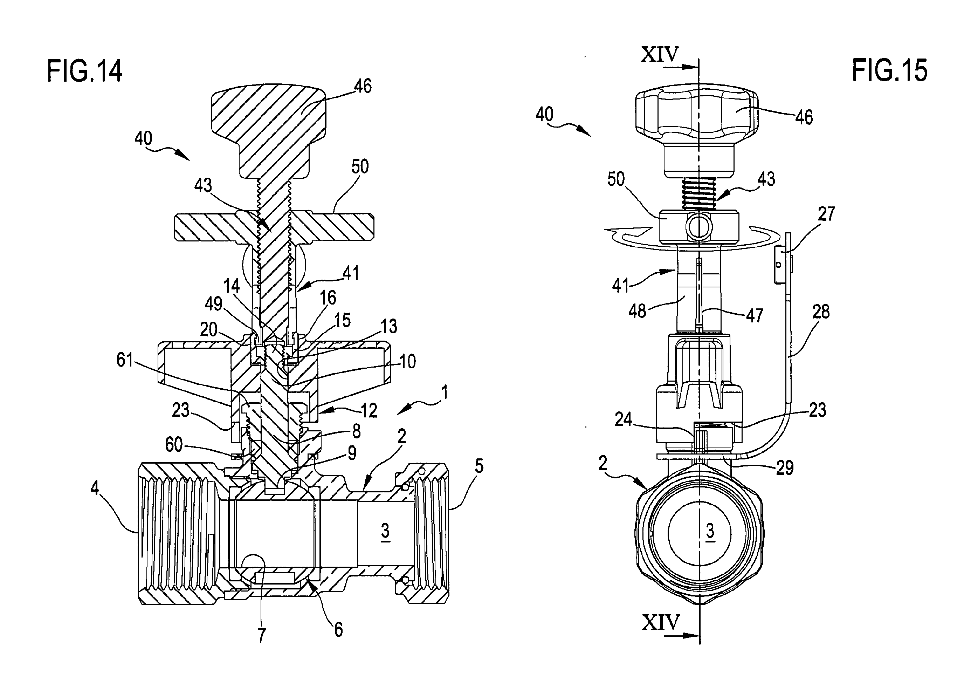

An obturator 6 operates internally of the main body 2, which obturator 6 is displaceable between a first and a second operating position; for example in the solution of the accompanying figures, the obturator is angularly displaceable between a first open position (for example shown in figures 8 and 14) and a second closed position (for example illustrated in figures 10 and 12): for this purpose the obturator 6 exhibits a respective passage 7 which can be selectively aligned or placed transversally with respect to the channel 3 of the main body. With the aim of moving the obturator 6 between the first and the second position, a transmission rod 8 is provided, having a first portion 9 connected to the obturator and a second portion 10 emerging externally with respect to the main body. Although only two angular positions are described herein, the device 1 can also be realised such as to comprise more than two different angular positions corresponding to respective functioning conditions. The first portion 9 of the rod 8 engages the obturator, for example by inserting therein such as to guarantee a solid coupling about the main axis 11 of the rod 8: in this way a rotation action of the rod is transmitted to the obturator organ. The second portion 10 of the rod is engaged to a manoeuvring organ 12, for example butterfly-shaped, lever-shaped, knob-shaped or having a further conformation which enables it to be activated. The coupling between the manoeuvring organ 12 and the second portion of the rod is such as to guarantee torsional solidarity between the two components such that the manoeuvring organ is able to displace the obturator between the first and the second operating positions.

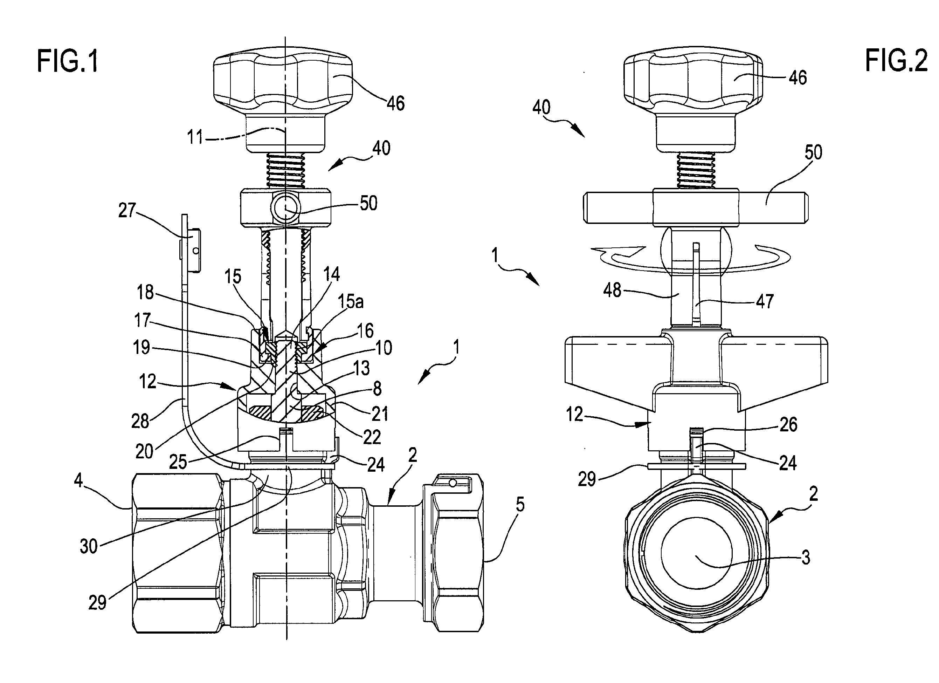

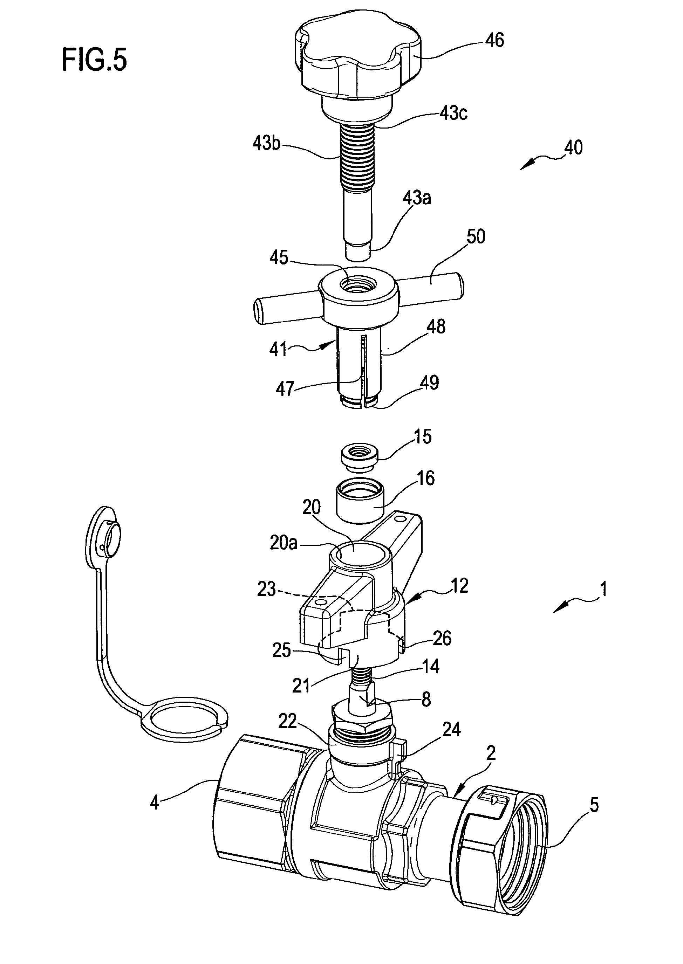

As can be seen particularly in figure 1, the manoeuvring organ 12 is crossed, at a through-hole 13, by the second portion 10 of the transmission rod 8; the rod 8 exhibits a terminal portion 14 destined to engage a removable stop element 15. As can be seen in figure 1 and figure 5, the terminal portion 14 is threaded and receives the removable stop element 15, also exhibiting a threaded seating 15a able to screw and unscrew on the terminal part with the aim of axially blocking the manoeuvring organ along the direction of the axis 11. In other words, when the stop element 15is engaged to the terminal part of the rod, on the opposite side with respect to the obturator, the element 15 axially constrains the manoeuvring organ to the transmission rod. By removing the stop element it is, vice versa, possible to remove the manoeuvring organ 12 from the stem 8, for example in order to reposition the manoeuvring organ 12 in a different angular position, as will be more fully explained herein below. Since fluid can circulate internally of the channel 3, for example fluid such as liquid or pressurised gas, a seal element 60 can be interposed between the rod 8 and a portion, for example the guide portion 22, solidly constrained to the body 2. In the illustrated embodiments, the seal element 60 is maintained in an axial position by a ring nut 61 positioned coaxially to the rod 8.

An auxiliary body 16 cooperates with the stop element 15, in particular when the stop element 15 is in an engaged condition to the terminal portion 14. In this condition, an anchoring portion 17 of the auxiliary body is located in a radially external position with respect to the stop element 15, while a gripping portion 18 connected to the anchoring portion is activatable such as to conjoinedly disengage the auxiliary body 16 and the stop element 15 from the second portion 10 of the transmission rod 8. In practice, the anchoring portion 17 at least partially embraces the stop element 15, while the gripping portion 18 extends axially (i.e. in a parallel direction to the axis 11) beyond the outline of the stop element in order to proffer an attachment zone to a tool that can be used to disengage the stop element.

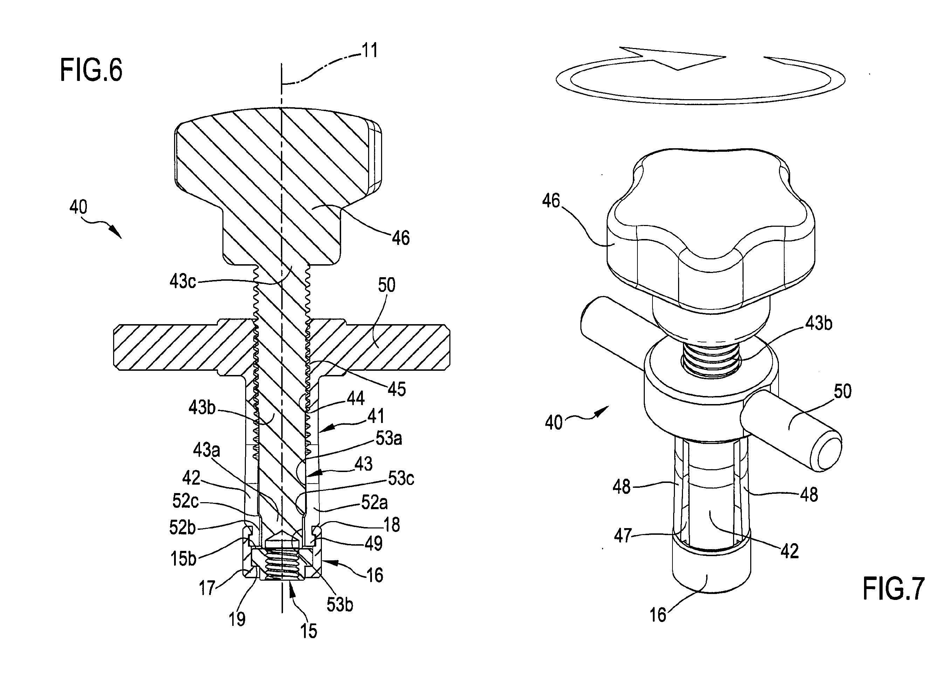

As can be seen in figure 1 and figure 6, the stop element 15 exhibits a radially externally lateral surface, which when the stop element is engaged to the stem is made inaccessible by the auxiliary body. In the illustrated example the radially external lateral surface has a generalised cylindrical body (i.e. having a shape of the surface generated by a line which rotates about an axis); in particular, the external radial surface of the element 15 has an external radial profile that is variable proceeding along a parallel direction to the axis 11 of the transmission rod 8: in greater detail, the stop element 15 exhibits a first portion having a cylindrical external surface and a first radius, and a second portion, consecutive to the first, having a cylindrical external surface with a second radius that is smaller than the first. Thus, an undercut 19 is formed between the first and the second portions, which, in a coupled condition of the stop element with the auxiliary body, cooperates with the anchoring portion 17. The described coupling is visible both in figure 1, where the assembly of the stop element and the auxiliary body is engaged to the rod 8, and in figures 6 and 7, where the assembly of the stop element and the auxiliary body is disengaged from the rod 8. In further detail, it can be seen that the auxiliary body 16 exhibits a substantially tubular structure having a cylindrical radially external surface and an internal radial surface which, in coupled conditions with the stop element 15, houses the stop element 15 internally thereof, rendering the stop element 15 inaccessible to a tool. The radially internal surface of the auxiliary body has at least a first part that is complementarily shaped to the radially external surface of the stop element and defines the anchoring portion 17: in practice the anchoring portion 17 can exhibit a terminal lip that extends radially internally of the auxiliary body in the direction of the removable stop element and engaging the undercut 19. On the opposite side with respect to the anchoring portion 17 and with reference to an engaged condition to the stop element, the auxiliary body 16 extends axially (along the direction of the axis 11) in a greater measure with respect to the axial extension of the stop element 15. In this way, the gripping portion 18 of the auxiliary body extends axially beyond a terminal surface 15b (see figure 6) of the stop element and comprises, for example, a gripping lip extending radially towards the inside of the auxiliary body. In this way, the gripping portion 18 can receive a tool usable for engaging and disengaging the stop element to the rod 8 of the device 1. The assembly of the stop element 15 and the auxiliary body 16 can be moved in an axially compacted condition (for example using the tool 40 described herein below) in which the assembly can be coupled or decoupled from the terminal portion of the rod 8 by acting of the gripping portion 18, as the stop element 15 and the auxiliary body are rendered torsionally solid to one another thanks to the interaction of the mutual contact surfaces between the two components.

When the assembly constituted by the stop element 15 and the auxiliary body 16 is engaged to the device 1, the assembly is housed in a cavity 20 of the manoeuvring organ 12 present on the side of the manoeuvring organ opposite the obturator, such that the external lateral surface of the auxiliary body is also made substantially inaccessible to the tool. The cavity 20 thus houses the terminal portion 14 of the transmission rod 8, the stop element 15 screwed on the portion 14 and at least a portion of the auxiliary body 16. In the illustrated example, with reference to an engaged condition of the stop element 15 to the rod 8, substantially the whole auxiliary body 16 is housed in the cavity 20 except, at most, an end part of the gripping portion which can slightly project axially from the cavity 20. In the illustrated example, the cavity 20 exhibits a beaker conformation and comprises an internal lateral surface that is complementarily shaped and substantially in contact with an external lateral surface of the auxiliary body 16 (the auxiliary body 16 in any case being able to rotate idle internally of the cavity 20): as can be seen in the accompanying figures, the internal lateral surface of the cavity 20 and the external lateral surface of the auxiliary body 16 can both be cylindrical, such that the engaging and disengaging of the assembly of the stop element plus the auxiliary body with the device 1 is facilitated. When the assembly of the stop element and the auxiliary body is coupled to the terminal portion of the rod 8, the stop element is screwed on the terminal portion and the auxiliary body is interposed between the radially external lateral surface of the element 15 and the radially internal surface of the cavity, with the gripping portion 18 being engageable by a special tool.

In the light of the above, it is clear that the stop element 15, once engaged to the rod 8, keeps the manoeuvring organ in an axial position which is suitable for the manoeuvring organ to engage the rod 8 and cause rotation of the obturator. The mananoeuvring organ 12 can also comprise at least a guide portion 21 cooperating with a corresponding guide counter-portion 22 present on the main body. The manoeuvring organ 12 can also comprise at least a guide portion 21 cooperating with a corresponding guide counter-portion 22 present on the main body. The angular movement of the manoeuvring organ is delimited by the interaction between end-run elements operating between the guide portions. In the example of figure 1, the guide portion 21 of the manoeuvring organ comprises at least an angular end-run element 23, cooperating with a respective angular end-run counter-element 24 present on the guide counter-portion 22 associated to the main body. In an alternative embodiment illustrated in the figures, the angular end-run element can comprise a track afforded on the guide portion of the manoeuvring organ: in this case, the counter-element 24 can comprise a relief predisposed to run in the track afforded on the guide portion. Alternatively, the angular end-run element 23 can comprise a relief fashioned on the guide portion 21 of the manoeuvring organ. In this case, the counter-element 24 can comprise a track predisposed to slidingly receive the relief borne by the guide portion. The element 23 and the counter-element 24 interact with the aim of delimiting the angular travel of the manoeuvring organ between an initial angular position and a final angular position corresponding to the first and second position of the obturator organ. The device 1 further comprises one or more angular blocking elements and respectively one or more counter-elements for blocking the obturator in one or more predetermined angular positions. For example, the device 1 can comprise a first angular blocking element 25, for example in the form of through-undercut present on the guide portion 21, and a second angular blocking element 26, for example also in the form of a through-undercut present on the guide portion 21. The elements 26 and 26 are angularly distanced and engage an angular blocking counter-element solidly constrained to the main body (note however that in principle only one of the elements 25 or 26 might be sufficient). In the illustrated case, the blocking counter-element coincides with the counter-element 24: note that in general the angular blocking counter-element might not also be the end-run counter-element. Alternatively to the illustrated solution the angular blocking elements might comprise one or more reliefs borne on the guide portion 21 and cooperating with respective one or more angular blocking seatings presently solidly constrained on the body 2. Lastly, a removable cap 27 might be located at the cavity 20, and in particular when the cavity is closed; the cap 27, in the illustrated example, is engageable in a snap-fastening or by forced coupling to the auxiliary body 16 at the opening 20a with the aim of preventing entry of dirt or undesired elements into the cavity 20. The cap 27 is terminally borne by a strip 28 having a further end 29 removably engaged to the body 2, for example at a connecting tract 30 thereof with the portion 22.

Also described is a tool 40 for engaging and disengaging the removable stop element 15 with respect to the fluid check device 1. The tool 40 comprises at least a coupling element 41, for example having a tubular shape, with a terminal portion 42 that can engage the gripping portion 18 of the auxiliary body 16, and at least a pusher element 43 cooperating with the coupling element. The pusher element 43 is arranged and shaped such that when the coupling element 41 engages the gripping portion of the auxiliary body, the pusher element is predisposed to strike against a terminal surface 15b of the stop element 15 (figures 1 and 6). The coupling element 41 internally houses at least a portion of the pusher element 43, which also exhibits a threaded portion 44 engaging a corresponding threaded portion 45 present internally of the coupling element. In practice, the pusher element 43 comprises a first end 43a destined to strike against the terminal surface 15b of the stop element 15, an intermediate tract 43b housing the threaded portion 44, and a second end 43c having a manoeuvring element 46 which is torsionally solid with the pusher element.

In turn, the coupling element 41 exhibits various parts. As previously mentioned, the terminal portion 42 of the element 41 is for engaging the auxiliary body. For this purpose, the terminal portion 42 of the coupling element exhibits one or more longitudinal incisions 47 defining longitudinal tracts 48 of the terminal portion that are able to flex radially and thus, on the one hand, to facility entry of the terminal portion 42 into the tubular body, passing beyond the lip 18, and on the other had to disengage from the auxiliary body when necessary. In the illustrated example, the terminal portion 42 exhibits, in longitudinal section (figure 6), a hooking lip 49 which can cooperate with the gripping lip 18 of the auxiliary body. Note that the threaded portion 44 of the coupling element extends at least partially on a tract free of incisions in order to couple with the threaded portion of the pusher element effectively such that a rotation between the pusher element and the coupling element realises a relative axial rotation between the pusher element and the coupling element along the longitudinal axis 11. The coupling element 41 also exhibits a respective manoeuvring element 50, preferably extending at an end of the coupling element opposite the end of the lip 49; the manoeuvring element 50 is for rotating the assembly formed by the stop element 15 and the auxiliary body 16 with respect to the threaded portion of the axis 8, as will be described herein below. The pusher element 43 comprises, at the terminal portion 43a, a converging tract 53c, for example truncoconical, destined to cooperate with a respective converging tract 52c of the portion 42 such as to radially open or contract the tracts 48. In the illustrated example, the terminal portion 43a exhibits a longitudinal tract 53a having a first external diameter and a second longitudinal tract 53b, consecutive to the first and having a second external diameter that is smaller than the first: the two tracts are connected by the converging tract 53c. Likewise, the coupling element 41 comprises, at the terminal portion 42, a longitudinal tract 52a having a first internal diameter and a second longitudinal tract 52b consecutive to the first and having a second internal diameter which is smaller than the first: the two longitudinal tracts of the portion 42 are connected by the converging tract 52c. Note that the internal diameter of the second longitudinal tract 52b is greater than the external diameter of the second longitudinal tract 53b, such as to enable the longitudinal tracts 48 to flex internalwise when the pusher is in the axially retracted position with respect to the coupling element 41. An axial sliding of the pusher element, caused by rotating the manoeuvring element 46 and maintaining the manoeuvring element 50 in position, causes an axial displacement of the tract 53c (with a passage of the pusher element from the retracted position to an advanced position with respect to the coupling element) which causes a radial expansion of the terminal portion of the coupling element and a contemporary movement of the pusher element against the surface 15b.

The tool 40 is used for engaging and disengaging the stop element to and from the check device. In particular, the tool 40 enables access to the gripping lip 18 and selectively disengaging and re-engaging the assembly constituted by the gripping element and the auxiliary body with respect to the terminal portion of the rod 8. In this way, the manoeuvring organ 12 can be axially blocked and unblocked with respect to the rod 8 and therefore the device 1.

In practice, to proceed to the disengaging of the stop element from the check device 1, the terminal portion 42 of the coupling element is inserted through the opening delimited by the gripping portion 18 of the auxiliary body 16 (see for example figure 12); thanks to the radial play between the tracts 52b and 53b, the tracts 48 can flex and enable engagement of the tool to the gripping portion 18; thus, by rotating the axial pusher with respect to the coupling element (by acting on the organ 46 and retaining the organ 50), a radial opening of the tracts 48 and of the lip 49 borne by the tracts is obtained, as well as an axial push against the surface 15b which enables axial compacting and therefore reciprocal torsional blocking of the stop element, the auxiliary body and the coupling element. At this point, a rotating of the organ 50 in the opposite direction to the previously-applied rotation leads to a corresponding rotation of the coupling element which is aimed at disengaging the assembly constituted by the auxiliary body and the stop element from the threaded part of the rod 8.

At this point the manoeuvring organ 12 can be removed from the rod 8 and positioned in the desired angular position. For example, if the obturator has reached a desired angular position, the manoeuvring organ can be repositioned in a position in which the angular blocking elements cooperate such as to prevent further rotations of the manoeuvring organ 12 and therefore of the obturator. When the manoeuvring organ 12 is repositioned, the tool 40 can be used for re-engaging the assembly constituted by the stop element 15 and the auxiliary body 16 (see figure 6) to the device 1 and thus newly achieve the axial blocking of the organ 12 with respect to the rod 8.

In practice, the tool 40 bearing the assembly constituted by the stop element 15 and the auxiliary body 16 is positioned such as to at least partially insert the assembly in the cavity 20. Then the coupling element 41 is rotated, via the organ 50, in a direction such as to engage the assembly constituted by the auxiliary body and the stop element to the second portion of the transmission rod; thereafter, the axial pusher 43 is rotated, acting on the organ 46 and blocking the organ 50, in an opposite direction to the preceding direction, such as to determine a relative axial translation of the portion 43a with respect to the portion 42. In practice, the portion 43a is retracted such as no longer to abut against the surface 15b, such that the torsional coupling between the auxiliary body and the stop element is freed. At the same time, the converging tract 53 disengages from the converging tract 52 such as to enable radial flexion of the tracts 48. At this point, with a simple traction, the terminal portion of the coupling element can be decoupled from the gripping portion of the auxiliary body.

## Claims

1. A fluid check device comprising:
a main body (2) internally exhibiting a fluid passage channel (3) extending between at least an inlet opening (4) and at least an outlet opening (5);
an obturator (6) housed internally of the main body (2) and displaceable between a first operating position and a second operating position;
a transmission rod (8) having a first portion which is connected to the obturator (6) and a second portion that emerges externally with respect to a main body (2);
a manoeuvring organ (12) engaged to the second portion of the transmission rod (8) for manoeuvring the obturator (6) between the first operating position and the second operating position, the manoeuvring organ being crossed by the second portion of the transmission rod (8);
a removable stop element (15) which, in a condition in which it is engaged to the second portion of the transmission rod (8), axially constrains the manoeuvring organ (12) to the transmission rod(8);
**characterised in that** it further comprises an auxiliary body (16), which in the engaged condition of the stop element (15), exhibits an anchoring portion (17) located in a radially external position with respect to the stop element and at least a gripping portion (18) activatable for together disengaging the auxiliary body (16) and the stop element (15) from the second portion of the transmission rod (8).

2. The device of claim 1, wherein the second portion of the transmission rod (8) exhibits a threaded part removably engagingly receiving a threaded seating of the removable stop element (15), and wherein the stop element (15) is engaged to an end of the transmission rod which is opposite the obturator.

3. The device of any one of the preceding claims, **characterised in that** the stop element (15) exhibits an external radial volume which is variable in progression along a parallel direction (11) to the transmission rod (8) and wherein the stop element (15) exhibits a first portion having a cylindrical external surface having a first radius and at least a second portion, consecutive to the first portion and exhibiting an external cylindrical surface having a second radius which is smaller than the first radius, an undercut (19) being defined between the first portion and the second portion.

4. The device of any one of the preceding claims, wherein the auxiliary body comprises a tubular element, and wherein the auxiliary body (16) exhibits a radially internal surface comprising at least a first part which is complementarily shaped with respect to the radially external surface of the stop element (15) and defining the anchoring portion (17).

5. The device of any one of the preceding claims, wherein the anchoring portion (17) of the auxiliary body (16) comprises a terminal lip extending radially internally of the auxiliary body, in a direction of the removable stop element (15), and engaging the undercut (19).

6. The device of any one of the preceding claims, wherein, in the engaged condition, the auxiliary body (16) houses the stop element (15) internally thereof, making the radially external surface of the stop element (15) inaccessible to a tool.

7. The device of any one of the preceding claims, wherein the auxiliary body (16) extends axially, with reference to an engaged position, more than the stop element (15) at least on a side opposite the transmission rod, and wherein the gripping portion (18) of the auxiliary body extends axially beyond a terminal surface (15b) of the stop element (15) and comprises a gripping lip extending radially towards an inside of the auxiliary body (16).

8. The device of any one of the preceding claims, wherein the manoeuvring organ (12) exhibits, on an opposite side to the obturator, a cavity (20) housing, in the engagement condition of the stop element (15), the terminal portion of the transmission rod (8), the stop element (15), and at least a portion of the auxiliary body (16), optionally wherein a radially-external lateral surface of the auxiliary body (16) in the engagement condition is rendered substantially inaccessible to access with a tool; and/or wherein the assembly of the stop element (15) and the auxiliary body (16) can be moved into an axial compacted condition at which the assembly can be coupled or decoupled from the terminal portion of the rod (8) by acting on the gripping portion (18), the stop element (15) being torsionally solidly constrained to the auxiliary body (16) in the axially compacted condition.

9. The device of any one of the preceding claims, wherein the obturator (6) comprises a body having at least a through-cavity, the body being angularly positionable in the first position, in order to enable a flow of fluid from the inlet opening (3) to the outlet opening (4), and in the second position in order to prevent fluid passage between the inlet opening (3) and the outlet opening (4), and wherein
the transmission rod (8) exhibits an end which is angularly constrained to the obturator (6) and a second end which is angularly constrained to the manoeuvring organ (12).

10. The device of any one of the preceding claims, wherein the manoeuvring organ (12) comprises at least a guide portion (21) cooperating with a corresponding guide counter-portion (22) solidly constrained to the main body (12), wherein the guide portion (21) of the manoeuvring organ (12) comprises at least an angular blocking element (25, 26) cooperating with a respective angular blocking counter-element (24) present on the guide counter-portion (22), and wherein the guide portion (21) of the manoeuvring organ (12) comprises at least an angular end-run element (23) cooperating with a respective angular end-run counter-element (24) on the guide counter-portion (22) in order to delimit an angular run of the manoeuvring organ between an initial angular position and a final angular position corresponding to the first position and the second position of the obturator organ.

11. A tool for engaging and disengaging a removable stop element to and from a fluid check device as in any one of the preceding claims, the tool comprising:
at least a coupling element (41) having a terminal portion (42) able to engage the gripping portion (18) of the auxiliary body (16), and
at least a pusher element (43) cooperating with the coupling element (41) for acting strikingly against a terminal surface of the stop element (15) when the coupling element (41) engages the gripping portion (18) of the auxiliary body, wherein:
the coupling element (41) exhibits a tubular conformation and internally houses at least a portion of the pusher element (43),
the pusher element (43) exhibits a threaded portion engaging with a corresponding threaded portion internally present on the coupling element (41),
the pusher element (43) comprises a first end (43a) destined to act abuttingly against the terminal surface (15b) of the stop element (15), an intermediate tract (43b) housing the threaded portion, and a second end (43c) having a respective manoeuvring element (46) torsionally solidly engaged to the pusher element (43).

12. The tool of claim 11, wherein the terminal portion (42) of the coupling element (41) exhibits one or more longitudinal incisions (47) defining longitudinal tracts (48) of the terminal portion able to flex radially, optionally wherein the threaded portion of the coupling element (41) extends at least partially on a tract which is free of incisions (47) in order to couple with the threaded portion of the pusher element (43), a relative rotation between the pusher element and the coupling element realising a relative axial motion between them; optionally wherein the terminal portion (42) of the coupling element (41) exhibits, in longitudinal section, a hooking portion (49) able to cooperate with the gripping lip (18) of the auxiliary body.

13. The tool of any one of claims from 11 to 12, wherein:
a terminal portion of the pusher element (43) exhibits a longitudinal tract (53a) having a first external diameter and a second longitudinal tract (53b),
consecutive to the first external diameter and having a second external diameter which is smaller than the first;
a terminal portion of the coupling element (41) exhibits a longitudinal tract (52a) having a first internal diameter and a second longitudinal tract (52b), consecutive to the first and having a second internal diameter which is smaller than the first, an axial sliding of the pusher element leading to a radial expansion of the terminal portion of the coupling element; the longitudinal tract (53a) being connected to the second longitudinal tract (53b) of the pusher element (43) by a converging tract (53c) which is optionally truncoconically conformed; and
the first longitudinal tract (52a) is connected to the second longitudinal tract (52b) of the coupling element by a respective converging tract (52c); and optionally wherein the internal diameter of the second longitudinal tract (52b) is greater than an external diameter of the second longitudinal tract (53b).

14. A process for disengaging the stop element from the check device of any one of claims from 1 to 10, by use of a tool as in any one of claims from 11 to 13, the process comprising following stages:
coupling a terminal portion of the coupling element (41) with the gripping portion (18) of the auxiliary body (16);
rotating the axial pusher (43) with respect to the coupling element (41) in a first direction such as to determine a corresponding axial movement capable of mutually torsionally blocking the stop element (15), the auxiliary body (16) and the coupling element (41); rotating the coupling element (41) in a second direction opposite the first direction in order to disengage the assembly constituted by the auxiliary body (16) and the stop element (15) from the second portion of the transmission rod (8) of the check device.

15. A process for engaging a stop element to a check device as in any one of claims from 1 to 10, by use of a tool as in any one of claims from 11 to 13, the tool engaging the assembly of the stop element (15) and the auxiliary body (16) to the terminal portion of the coupling element (41), the process comprising following stages:
rotating the coupling element (41) in a first direction for engaging an assembly constituted by the auxiliary body (16) and the stop element (15) to the second portion of the transmission rod (8);
rotating the axial pusher (43) with respect to the coupling element (41) in order to realise an axial displacement capable of torsionally unblocking the stop element, the auxiliary body and the coupling element;
decoupling the terminal portion of the coupling element (43) from the gripping portion (18) of the auxiliary body (16).

## Patentansprüche

1. Fluidsperrvorrichtung umfassend:
einen Hauptkörper (2), der im Inneren einen sich zwischen mindestens einer Eingangsöffnung (4) und mindestens einer Ausgangsöffnung (5) erstreckenden Fluiddurchgangskanal (3) aufweist;
einen Verschluss (6), der im Inneren des Hauptkörpers (2) aufgenommen und zwischen einer ersten Betriebsstellung und einer zweiten Betriebsstellung bewegbar ist;
eine Übertragungsstange (8) mit einem ersten Abschnitt,
der mit dem Verschluss (6) verbunden ist, und einem zweiten Abschnitt, der außen von einem Hauptkörper (2) vorsteht;
ein Betätigungsorgan (12), das mit dem zweiten Abschnitt der Übertragungsstange (8) zur Bewegung des Verschlusses (6) zwischen der ersten Betriebsstellung und der zweiten Betriebsstellung eingegriffen ist, wobei das Betätigungsorgan sich mit dem zweiten Abschnitt der Übertragungsstange (8) überschneidet;
ein entfernbares Stoppelement (15), das in einem Zustand, bei dem es mit dem zweiten Abschnitt der Übertragungsstange (8) eingegriffen ist, das Betätigungsorgan (12) an die Übertragungsstange (8) axial belegt;
**dadurch gekennzeichnet, dass** sie weiter einen Nebenkörper (16) umfasst, der im eingegriffenen Zustand des Stoppelementes (15) einen Verankerungsabschnitt (17), der sich in einer radial äußeren Stellung gegenüber dem Stoppelement befindet, und mindestens einen Halteabschnitt (18), der zum gemeinsamen Entkoppeln des Nebenkörpers (16) und des Stoppelementes (15) vom zweiten Abschnitt der Übertragungsstange (8) aktivierbar ist, aufweist.

2. Vorrichtung nach Anspruch 1, wobei der zweite Abschnitt der Übertragungsstange (8) einen Gewindeteil aufweist, der einen Gewindesitz des entfernbaren Stoppelementes (15) mit entfernbarem Eingriff aufnimmt, und wobei das Stoppelement (15) mit einem dem Verschluss gegenüberliegenden Ende der Übertragungsstange eingegriffen ist.

3. Vorrichtung nach einem der vorhergehenden Ansprüche, **dadurch gekennzeichnet, dass** das Stoppelement (15) ein äußeres radiales Volumen aufweist, das entlang einer Parallelrichtung (11) zur Übertragungsstange (8) progressiv veränderbar ist, und wobei das Stoppelement (15) einen ersten Abschnitt mit einer äußeren zylindrischen Fläche mit einem ersten Radius und mindestens einen zweiten Abschnitt, der dem ersten Abschnitt folgt und eine äußere zylindrische Fläche mit einem zweiten Radius, der kleiner ist als der erste Radius, besitzt, aufweist, wobei eine Hinterschneidung (19) zwischen dem ersten Abschnitt und dem zweiten Abschnitt definiert ist.

4. Vorrichtung nach einem der vorhergehenden Ansprüche, wobei der Nebenkörper ein Rohrelement umfasst, und wobei der Nebenkörper (16) eine radial innere Fläche aufweist, umfassend mindestens einen ersten Teil, der gegenüber dem radial äußeren Fläche des Stoppelementes (15) komplementär geformt ist, und den Verankerungsabschnitt (17 definierend).

5. Vorrichtung nach einem der vorhergehenden Ansprüche, wobei der Verankerungsabschnitt (17) des Nebenkörpers (16) eine Endlippe umfasst, die sich radial innen im Nebenkörper in einer Richtung des lösbaren Stoppelementes (15) erstreckt und mit der Hinterschneidung (19) eingreift.

6. Vorrichtung nach einem der vorhergehenden Ansprüche, wobei im eingegriffenen Zustand der Nebenkörper (16) das Stoppelement (15) im Inneren aufnimmt, wodurch die radial äußere Fläche des Stoppelementes (15) unzugänglich für ein Werkzeug gemacht wird.

7. Vorrichtung nach einem der vorhergehenden Ansprüche, wobei der Nebenkörper (16) sich axial gegenüber einer eingegriffenen Stellung weiter als das Stoppelement (15) mindestens auf einer der Übertragungsstange gegenüberliegenden Seite erstreckt, und wobei der Halteabschnitt (18) des Nebenkörpers sich axial über eine Endfläche (15b) des Stoppelementes (15) hinaus erstreckt und eine Haltelippe umfasst, die sich radial zu einer Innenseite des Nebenkörpers (16) erstreckt.

8. Vorrichtung nach einem der vorhergehenden Ansprüche, wobei das Betätigungsorgan (12) auf einer dem Verschluss gegenüberliegenden Seite einen Hohlraum (20) aufweist, der im Eingriffszustand des Stoppelementes (15) den Endabschnitt der Übertragungsstange (8), das Stoppelement (15) und mindestens einen Abschnitt des Nebenkörpers (16) aufnimmt, wobei optional eine radial äußere Seitenfläche des Nebenkörpers (16) im Eingriffszustand im Wesentlichen unzugänglich für ein Werkzeug gemacht wird; und/oder wobei der Zusammenbau bestehend aus dem Stoppelement (15) und dem Nebenkörper (16) zu einem axial kompaktierten Zustand bewegt werden kann, bei dem der Zusammenbau mit dem Endabschnitt der Stange (8) durch Einwirken am Halteabschnitt (18) gekoppelt oder davon entkoppelt werden kann, wobei das Stoppelement (15) am Nebenkörper (16) im axial kompaktierten Zustand torsionsfest belegt ist.

9. Vorrichtung nach einem der vorhergehenden Ansprüche, wobei der Verschluss (6) einen Körper mit mindestens einem Durchgangshohlraum umfasst, wobei der Körper in der ersten Stellung, um einen Fluidfluss von der Eingangsöffnung (3) zur Ausgangsöffnung (4) zu ermöglichen, und in der zweiten Stellung, um den Fluiddurchgang zwischen der Eingangsöffnung (3) und der Ausgangsöffnung (4), im Winkel positionierbar ist,
und wobei
die Übertragungsstange (8) ein Ende, das am Verschluss (6) winkelfest belegt ist, und ein zweites Ende, das am Betätigungsorgan (12) winkelfest belegt ist, aufweist.

10. Vorrichtung nach einem der vorhergehenden Ansprüche, wobei das Betätigungsorgan (12) mindestens einen Führungsabschnitt (21) umfasst, der mit einem entsprechenden Führungsgegenabschnitt (22) zusammenwirkt, der mit dem Hauptkörper (12) fest verbunden ist, wobei der Führungsabschnitt (21) des Betätigungsorganes (12) mindestens ein Winkelsperrelement (25, 26) umfasst, das mit einem entsprechenden, am Führungsgegenabschnitt (22) liegenden Winkelsperrgegenelement (24) zusammenwirkt, und wobei der Führungsabschnitt (21) des Betätigungsorganes (12) mindestens ein Winkelbegrenzungselement (23) umfasst, das mit einem entsprechenden Winkelbegrenzungsgegenelement (24) am Führungsgegenabschnitt (22) zusammenwirkt, um einen Winkellauf des Betätigungsorganes zwischen einer Anfangswinkelstellung und einer Endwinkelstellung, die der ersten Stellung und der zweiten Stellung des Verschlusselementes entsprechen, zu begrenzen.

11. Werkzeug zum Koppeln und Entkoppeln eines entfernbaren Stoppelementes mit und von einer Fluidsperrvorrichtung nach einem der vorhergehenden Ansprüche, wobei das Werkzeug umfasst:
mindestens ein Kopplungselement (41) mit einem Endabschnitt (42), der mit dem Halteabschnitt (18) des Nebenkörpers (16) eingreifen kann, und
mindestens ein Stoßelement (43), das mit dem Kopplungselement (41) zum anschlagenden Einwirken gegen eine Endfläche des Stoppelementes (15) zusammenwirkt, wenn das Kopplungselement (41) mit dem Halteabschnitt (18) des Nebenkörpers eingreift,
wobei
das Kopplungselement (41) eine Rohrgestalt aufweist und mindestens einen Abschnitt des Stoßelementes (43) im Inneren aufnimmt,
das Stoßelement (43) einen Gewindeabschnitt aufweist, der mit einem entsprechenden, am Kopplungselement (41) liegenden Gewindeabschnitt eingreift,
das Stoßelement (43) ein erstes Ende (43a), das zum anstoßenden Einwirken gegen die Endfläche (15b) des Stoppelementes (15) vorgesehen ist, einen Zwischenteil (43b), der den Gewindeabschnitt aufnimmt, und ein zweites Ende (43c) mit einem entsprechenden Betätigungsorgan (46), das am Stoßelement (43) torsionsfest belegt ist, umfasst.

12. Werkzeug nach Anspruch 11, wobei der Endabschnitt (42) des Kopplungselementes (41) einen oder mehreren Längseinschnitte (47) aufweist, die Längsteile (48) des Endabschnittes definiert, die sich radial biegen können, wobei optional der Gewindeabschnitt des Kopplungselementes (41) sich mindestens teilweise auf einem Teil ohne Einschnitte (47) erstreckt, um mit dem Gewindeabschnitt des Stoßelementes (43) gekoppelt zu werden, wobei eine relative Drehung zwischen dem Stoßelement und dem Kopplungselement eine relative axiale Bewegung dazwischen ausführt; wobei optional der Endabschnitt (42) des Kopplungselementes (41) im Längsschnitt einen Einhakabschnitt (49) aufweist, der mit der Haltelippe (18) des Nebenkörpers zusammenwirken kann.

13. Werkzeug nach einem der Ansprüche 11 bis 12, wobei:
ein Endabschnitt des Stoßelementes (43) einen Längsteil (53a) mit einem ersten Außendurchmesser und einen dem ersten Außendurchmesser folgenden Längsteil (53b) mit einem zweiten Außendurchmesser, der kleiner ist als der erste, aufweist;
ein Endabschnitt des Kopplungselementes (41) einen Längsteil (52a) mit einem ersten Innendurchmesser und
einen dem ersten Teil folgenden Längsteil (52b) mit einem zweiten Innendurchmesser, der kleiner ist als der erste, aufweist, wobei ein axiales Gleiten des Stoßelementes zu einer radialen Aufweitung des Endabschnitts des Kopplungselementes führt; wobei der Längsteil (53a) mit dem zweiten Längsteil (53b) des Stoßelementes (43) durch einen konvergierenden Teil (53c) verbunden ist, der optional als ein Kegelstumpf geformt ist;
und
der erste Längsteil (52a) mit dem zweiten Längsteil (52b) des Kopplungselementes durch einen entsprechenden konvergierenden Teil (52c) verbunden ist; und wobei optional der Innendurchmesser des zweiten Längsteiles (52b) größer ist als ein Außendurchmesser des zweiten Längsteiles (53b).

14. Verfahren zur Entkopplung des Stoppelementes von der Sperrvorrichtung nach einem der Ansprüche 1 bis 10 unter Verwendung eines Werkzeuges nach einem der Ansprüche 11 bis 13, wobei das Verfahren die folgenden Schritte umfasst:
Koppeln eines Endabschnittes des Kopplungselementes (41) mit dem Halteabschnitt (18) des Nebenkörpers (16);
Drehen des axialen Stoßelementes (43) in Bezug auf das Kopplungselement (41) in einer ersten Richtung, um eine entsprechende Axialbewegung zum gegenseitigen Drehsperren des Stoppelementes (15), des Nebenkörpers (16) und des Kopplungselementes (41) zu bestimmen;
Drehen des Kopplungselementes (41) in einer der ersten Richtung entgegengesetzten Richtung, um den Zusammenbau bestehend aus dem Nebenkörper (16) und dem Stoppelement (15) vom zweiten Abschnitt der Übertragungsstange (8) der Sperrvorrichtung frei zu geben.

15. Verfahren zum Eingreifen eines Stoppelementes mit einer Sperrvorrichtung nach einem der Ansprüche 1 bis 10 unter Verwendung eines Werkzeuges nach einem der Ansprüche 11 bis 13, wobei das Werkzeug den Zusammenbau bestehend aus dem Stoppelement (15) und dem Nebenkörper (16) mit dem Endabschnitt des Kopplungselementes (41) eingreift, wobei das Verfahren die folgenden Schritte umfasst:
Drehen des Kopplungselementes (41) in einer ersten Richtung zum Eingreifen eines Zusammenbaues bestehend aus dem Nebenkörper (16) und dem Stoppelement (15) mit dem zweiten Abschnitt der Übertragungsstange (8);
Drehen des axialen Stoßelementes (43) gegenüber dem Kopplungselement (41), um eine Axialbewegung zum Drehentsperren des Stoppelementes, des Nebenkörpers und des Kopplungselementes zu verursachen;
Entkoppeln des Endabschnittes des Kopplungselementes (43) vom Halteabschnitt (18) des Nebenkörpers (16).

## Revendications

1. Dispositif anti-retour de fluide comprenant:
un corps principal (2) présentant à son intérieur un canal de passage du fluide (3) s'étendant entre au moins une ouverture d'entrée (4) et au moins une ouverture de sortie (5);
un obturateur (6) logé à l'intérieur du corps principal (2) et pouvant se déplacer entre une premier position opérationnelle et une deuxième position opérationnelle;
une tige de transmission (8) ayant une première portion reliée à l'obturateur (6) et une deuxième portion saillant à l'extérieur par rapport au corps principal (2) ;
un organe de manoeuvre (12) engagé à la deuxième portion de la tige de transmission (8) pour déplacer l'obturateur (6) entre la première position opérationnelle et la deuxième position opérationnelle,
l'organe de manoeuvre étant traversé par la deuxième portion de la tige de transmission (8);
un élément d'arrêt amovible (15) qui, dans une condition dans laquelle il est engagé à la deuxième portion de la tige de transmission (8), relie axialement l'organe de manoeuvre (12) à la tige de transmission (8);
**caractérisé en ce que** il comprend en outre un corps auxiliaire (16) qui, dans la condition engagée de l'élément d'arrêt (15), présente une portion d'ancrage (17) placée dans une position radialement extérieure par rapport à l'élément d'arrêt et au moins une portion de serrage (18) activable pour désengager ensemble le corps auxiliaire (16) et l'élément d'arrêt (15) de la deuxième portion de la tige de transmission (8).

2. Dispositif selon la revendication 1, où la deuxième portion de la tige de transmission (8) présente une partie filetée recevant en engagement amovible un siège fileté de l'élément d'arrêt amovible (15), et où l'élément d'arrêt (15) est engagé à une extrémité de la tige de transmission opposée à l'obturateur.

3. Dispositif selon l'une quelconque des revendications précédentes, **caractérisé en ce que** l'élément d'arrêt (15) présente un volume radial extérieur qui est variable en progression le long d'une direction parallèle (11) vers la tige de transmission (8), et où l'élément d'arrêt (15) présente une première portion ayant une surface cylindrique extérieure avec un premier rayon et au moins une deuxième portion, consécutive à la première portion et présentant une surface cylindrique extérieure ayant un deuxième rayon qui est plus court que le premier rayon, une gorge (19) étant définie entre la première portion et la deuxième portion.

4. Dispositif selon l'une quelconque des revendications précédentes, où le corps auxiliaire comprend un élément tubulaire et où le corps auxiliaire (16) présente une surface radialement intérieure comprenant au moins une première partie de forme complémentaire par rapport à la surface radialement extérieure de l'élément d'arrêt (15) et définissant la portion d'ancrage (17).

5. Dispositif selon l'une quelconque des revendications précédentes, où la portion d'ancrage (17) du corps auxiliaire (16) comprend un bord terminal s'étendant radialement à l'intérieur du corps auxiliaire, dans la direction de l'élément d'arrêt amovible (15), et engageant la gorge (19).

6. Dispositif selon l'une quelconque des revendications précédentes, où dans la condition engagée le corps auxiliaire (16) loge l'élément d'arrêt (15) à son intérieur, rendant la surface radialement extérieur de l'élément d'arrêt (15) inaccessible pour un outil.

7. Dispositif selon l'une quelconque des revendications précédentes, où le corps auxiliaire (16) s'étend axialement, par rapport à une position engagée, au-delà de l'élément d'arrêt (15) au moins sur un côté opposé à la tige de transmission, et où la portion de serrage (18) du corps auxiliaire s'étend axialement au-delà d'une surface terminale (15b) de l'élément d'arrêt (15) et comprend un bord de serrage s'étendant radialement vers l'intérieur du corps auxiliaire (16).

8. Dispositif selon l'une quelconque des revendications précédentes, où l'organe de manoeuvre (12) présente, sur un côté opposé à l'obturateur, une cavité (20) logeant, dans la condition d'engagement de l'élément d'arrêt (15), la portion terminale de la tige de transmission (8), l'élément d'arrêt (15) et au moins une portion du corps auxiliaire (16), optionnellement où une surface latérale radialement extérieure du corps auxiliaire (16) dans la condition d'engagement est rendue substantiellement inaccessible pour un outil; et/ou l'ensemble de l'élément d'arrêt (15) et du corps auxiliaire (16) peut être porté dans une condition axiale compactée dans laquelle l'ensemble peut être couplé ou découplé de la portion terminale de la tige (8) en agissant sur la portion de serrage (18), l'élément d'arrêt (15) étant reliée solidement en torsion au corps auxiliaire (16) dans la condition axialement compactée.

9. Dispositif selon l'une quelconque des revendications précédentes, où l'obturateur (6) comprend un corps ayant au moins une cavité passante, le corps étant positionnable angulairement dans la première position afin de permettre un flux de fluide de l'ouverture d'entrée (3) vers l'ouverture de sortie (4), et dans la deuxième position afin de bloquer le passage de fluide entre l'ouverture d'entrée (3) et l'ouverture de sortie (4),
et où
la tige de transmission (8) présente une extrémité reliée angulairement à l'obturateur (6) et une deuxième extrémité reliée angulairement à l'organe de manoeuvre (12).

10. Dispositif selon l'une quelconque des revendications précédentes, où l'organe de manoeuvre (12) comprend au moins une portion de guide (21) coopérant avec une contre-portion de guide correspondante (22) reliée solidement au corps principal (12), où la portion de guide (21) de l'organe de manoeuvre (12) comprend au moins un élément de blocage angulaire (25, 26) coopérant avec un contre-élément de blocage angulaire correspondant (24) présent sur la contre-portion de guide (22), et où la portion de guide (21) de l'organe de manoeuvre (12) comprend au moins un élément de fin de course angulaire (23) coopérant avec un contre-élément de fine de course angulaire correspondant (24) sur la contre-portion de guide (22) afin de délimiter une course angulaire de l'organe de manoeuvre entre une position angulaire initiale et une position angulaire finale correspondant à la première position et à la deuxième position de l'obturateur.

11. Outil pour engager et désengager un élément d'arrêt amovible à et d'un dispositif anti-retour de fluide selon l'une quelconque des revendications précédentes, l'outil comprenant:
au moins un élément d'accouplement (41) ayant une portion terminale (42) apte à engager la portion de serrage (18) du corps auxiliaire (16), et
au moins un élément de poussée (43) coopérant avec l'élément d'accouplement (41) pour agir en frappant contre une surface terminale de l'élément d'arrêt (15) lorsque l'élément d'accouplement (41) engage la portion de serrage (18) du corps auxiliaire,
où
l'élément d'accouplement (41) présente une forme tubulaire et loge à son intérieur au moins une portion de l'élément de poussée (43),
l'élément de poussée (43) présente une portion filetée s'engageant avec une portion filetée correspondante présente à l'intérieur de l'élément d'accouplement (41),
l'élément de poussée (43) comprend une première extrémité (43a) apte à agir en butée contre la surface terminale (15b) de l'élément d'arrêt (15), une section intermédiaire (43b) logeant la portion filetée, et une deuxième extrémité (43c) ayant un élément de manoeuvre correspondant (46) engagé solidement en torsion à l'élément de poussée (43).

12. Outil selon la revendication 11, où la portion terminale (42) de l'élément d'accouplement (41) présente une ou plusieurs incisions longitudinales (47) définissant des sections longitudinales (48) de la portion terminale aptes à se plier radialement, optionnellement où la portion filetée de l'élément d'accouplement (41) s'étend au moins partiellement sur une section sans incisions (47) afin de s'accoupler avec la portion filetée de l'élément de poussée (43), une rotation relative entre l'élément de poussée et l'élément d'accouplement réalisant un mouvement axial relatif entre les deux; optionnellement où la portion terminale (42) de l'élément d'accouplement (41) présente en section longitudinale une portion d'accrochage (49) apte à coopérer avec le bord de serrage (18) du corps auxiliaire.

13. Outil selon l'une quelconque des revendications 11 à 12, où:
une portion terminale de l'élément de poussée (43) présente une section longitudinale (53a) ayant un premier diamètre extérieur et une deuxième section longitudinale (53b), consécutive au premier diamètre extérieur et ayant un deuxième diamètre extérieur plus court que le premier;
une portion terminale de l'élément d'accouplement (41) présente une section longitudinale (52a) ayant un premier diamètre intérieur et une deuxième section longitudinale (52b), consécutive à la première et ayant un deuxième diamètre intérieur plus court que le premier, un glissement axial de l'élément de poussée déterminant une expansion radiale de la portion terminale de l'élément d'accouplement; la section longitudinale (53a) étant reliée à la deuxième section longitudinale (53b) de l'élément de poussée (43) par une section de convergence (53c) qui est optionnellement en forme de cône tronqué; et
la première section longitudinale (52a) est reliée à la deuxième section longitudinale (52b) de l'élément d'accouplement par une section de convergence correspondante (52c); et optionnellement où le diamètre intérieur de la deuxième section longitudinale (52b) est plus long qu'un diamètre extérieur de la deuxième section longitudinale (53b).

14. Procédé pour désengager l'élément d'arrêt du dispositif anti-retour selon l'une quelconque des revendications 1 à 10 au moyen d'un outil selon l'une quelconque des revendications 11 à 13, le procédé comprenant les étapes suivantes:
accoupler une portion terminale de l'élément d'accouplement (41) avec la portion de serrage (18) du corps auxiliaire (16);
tourner le poussoir axial (43) par rapport à l'élément d'accouplement (41) dans une première direction de sorte à déterminer un mouvement axial correspondant à même de bloquer réciproquement en torsion l'élément d'arrêt (15), le corps auxiliaire (16) et l'élément d'accouplement (41); tourner l'élément d'accouplement (41) dans une deuxième direction opposée à la première direction afin de désengager l'ensemble formé par le corps auxiliaire (16) et l'élément d'arrêt (15) de la deuxième portion de la tige de transmission (8) du dispositif anti-retour.

15. Procédé pour engager un élément d'arrêt à un dispositif anti-retour selon l'une quelconque des revendications 1 à 10 au moyen d'un outil selon l'une quelconque des revendications 11 à 13, l'outil engageant l'ensemble de l'élément d'arrêt (15) et du corps auxiliaire (16) à la portion terminale de l'élément d'accouplement (41), le procédé comprenant les étapes suivantes:
tourner l'élément d'accouplement (41) dans une première direction afin d'engager un ensemble formé par le corps auxiliaire (16) et l'élément d'arrêt (15) à la deuxième portion de la tige de transmission (8);
tourner le poussoir axial (43) par rapport à l'élément d'accouplement (41) de sorte à réaliser un mouvement axial à même de débloquer en torsion l'élément d'arrêt, le corps auxiliaire et l'élément d'accouplement;
découpler la portion terminale de l'élément d'accouplement (43) de la portion de serrage (18) du corps auxiliaire (16).
